# EUROPÄISCHE PATENTSCHRIFT

(11) **EP 3 199 015 B1**
(45) Veröffentlichungstag und Bekanntmachung des Hinweises auf die Patenterteilung: **17.07.2019**
(21) Anmeldenummer: 17151049.8
(22) Anmeldetag: 11.01.2017
(51) Int. Cl.: A01F 15/07

(54) **BALLENPRESSE**
BALING PRESS
PRESSE À BALLES

(30) Priorität: 28.01.2016 DE 202016000568 U
(43) Veröffentlichungstag der Anmeldung: 02.08.2017
(73) Patentinhaber: PÖTTINGER Landtechnik GmbH, 4710 Grieskirchen (AT)
(72) Erfinder: Bumberger, Rainer, 4141 Pfarrkirchen (AT); Lackner, Christian, 4060 Leonding (AT); Prechtl, Wolfgang, 4722 Bruckwaasen (AT)
(74) Vertreter: Thoma, Michael

(56) Entgegenhaltungen:
- EP-A2- 2 700 297
- WO-A1-2015/035375
- DE-A1-102012 017 401
- US-A1- 2009 282 788
- US-A1- 2012 240 527

## Beschreibung

Die vorliegende Erfindung betrifft eine Ballenpresse zum Erzeugen eines Erntegutballens, mit einer Wickelvorrichtung zum Umwickeln eines geformten Erntegutballens mit Wickelmaterial wie Folie, Netz oder dergleichen, wobei die Wickelvorrichtung einen Wickelmaterialspeicher, von dem Wickelmaterial abziehbar ist, sowie eine Bremsvorrichtung zum Einstellen einer Wickelmaterialspannung umfasst.

Landwirtschaftliche Ballenpressen können eine Aufnahmevorrichtung beispielsweise in Form einer Pick-up umfassen, um halm- und/oder blattförmiges Erntegut wie beispielsweise Gras, Heu oder Stroh vom Boden aufzunehmen und in eine Ballenformkammer zu fördern, in der das Erntegut dann zu einem Ballen geformt wird. Eine solche Ballenformkammer kann drehbare und/oder rotatorisch antreibbare Umlenkwalzen und/oder umlaufende Riemen aufweisen, um das Erntegut zu einem Ballen zu formen.

Ein solcher geformter Ballen kann im Anschluss mit einem Wickelmaterial umhüllt werden, beispielsweise einem Netz und/oder einer Folie und/oder Bändern und/oder Schnüren, wobei das genannte Wickelmaterial von einem Wickelmaterialspeicher abgezogen werden kann, um um den geformten Ballen gewickelt zu werden. Ein solcher Wickelmaterialspeicher kann beispielsweise eine Speicherwalze umfassen, auf der das Wickelmaterial nach Art eines Coils aufgewickelt ist. Das von dem Wickelmaterialspeicher abgezogene Material kann beispielsweise in das Innere der Ballenformkammer gefädelt bzw. zugeführt werden, um nach erfolgter Formung eines Ballens in einem Wickelzyklus den Ballen zu umwickeln. Hierzu kann beispielsweise eine Bindeeinheit verwendet werden, die zwischen Binde- und Ruhepositionen hin- und herfahrbar sein kann und eine Abtrennvorrichtung umfassen kann, die das Wickelmaterial abschneidet bzw. abtrennt, wenn die Umwicklung erfolgt ist.

Um ein hochwertiges und verlässliches Umwickeln des Ballens zu erreichen, ist es hilfreich, wenn das Wickelmaterial die richtige Wickelmaterialspannung hat. Ist das Wickelmaterial zu schlaff bzw. zu wenig gespannt, wird der Ballen nicht ausreichend fest umwickelt oder es kommt zu einem Schieflauf oder gar Verheddern des Wickelmaterials. Ist umgekehrt die Wickelmaterialspannung zu hoch, kann das Wickelmaterial reißen oder der Ballen zu stark umschnürt werden. Um hier die richtige Wickelmaterialspannung einstellen zu können, wurde bereits vorgeschlagen, eine Bremsvorrichtung zu verwenden, mit Hilfe derer der Widerstand beim Abziehen des Wickelmaterials bzw. beim Einziehen des Wickelmaterials passend eingestellt werden kann. Eine solche Bremsvorrichtung kann direkt am Wickelmaterialspeicher angreifen, um das Abziehen vom Wickelmaterialspeicher zu bremsen, oder ggfs. auch an einer nachgeordneten Umlenkwalze angreifen, über die das Wickelmaterial umgelenkt wird, oder ein speziell vorgesehenes Bremswalzenpaar, durch das das Wickelmaterial hindurchlaufen muss, bremsen.

Bei herkömmlichen Ballenpressen ist es jedoch schwierig, mit einer solchen Bremsvorrichtung die Wickelmaterialspannung tatsächlich richtig einzustellen. Der Wickelprozess unterliegt vielen Schwankungen, auf die solche Bremsvorrichtungen nicht ausreichend reagieren können. Zum anderen ist die Bremswirkung und damit die Wickelmaterialspannung nicht ausreichend präzise einstellbar. Ferner behindert die für den eigentlichen Wickelprozess vorgesehene Bremskraft Anlaufvorgänge und Setup-Prozesse, insbesondere z.B. das Einfädeln des Wickelmaterials und das anfängliche Mitnehmen des Wickelmaterials zu Beginn des Wickelprozesses. Steht hier das Wickelmaterial unter zu hoher Spannung bzw. ist die Bremskraft zu hoch, wird das Wickelmaterial nicht richtig mitgenommen, da der anfängliche Umschlingungswinkel hierzu noch nicht ausreicht.

Bekannte Ballenpressen der eingangs genannten Art sind beispielsweise aus den Schriften DE 20 2014 003 633 U1, DE 10 2007 031 187 A1 oder DE 10 2013 007 296 A1 bekannt.

Ferner ist aus der Schrift US 2009/0282788 A1 eine Ballenpresse bekannt, bei der für verschiedene Wickelmaterialien verschiedene Bremskraftverläufe vorgebbar sind, wobei für verschiedene Phasen des Wickelvorgangs verschiedene Bremskraftniveaus als Funktion der Zeit, genauer gesagt des Zeitablaufs eines Wickelvorgangs vorgegeben werden. Der Bremsaktor wird entsprechend dem vorgegebenen Bremskraftprofil zugestellt.

Aus der DE 10 2012 017 401 A1 ist eine Ballenpresse bekannt, bei der die Wickelfolie mittels eines Tänzers gespannt wird, wobei aus einer übergroßen Bewegung des Tänzers auf ein Reißen der Wickelfolie geschlossen wird.

Aus US 2012/0240527 A1 ist eine Ballenpresse bekannt, die den Wickelprozess in Abhängigkeit der Wickelmaterialspannung steuert. Die Spannung im Wickelmaterial wird über eine Geschwindigkeitsdifferenz zwischen Rotation des Ballens und Rotation der Wickelmaterialrolle bestimmt.

Der Erfindung liegt die Aufgabe zugrunde, eine verbesserte Ballenpresse der eingangs genannten Art zu schaffen, die Nachteile des Standes der Technik vermeidet und letzteren in vorteilhafter Weise weiterbildet. Insbesondere soll eine möglichst präzise, jeweils passende Wickelspannung bereitgestellt werden, ohne Anlaufprozesse der Wickelzyklen oder Setup-Vorgänge hierfür ungebührlich zu beeinträchtigen.

Erfindungsgemäß wird die genannte Aufgabe durch eine Ballenpresse gemäß Anspruch 1 gelöst. Bevorzugte Ausgestaltungen der Erfindung sind Gegenstand der abhängigen Ansprüche.

Es wird also vorgeschlagen, eine mit unterschiedlicher Bremskraft betätigbare Bremse zu verwenden und in Abhängigkeit des Betriebszustands der Ballenpresse so anzusteuern, dass die Bremskraft automatisch variabel für den jeweiligen Betriebszustand passend eingestellt wird. Erfindungsgemäß umfasst die Bremsvorrichtung einen fremdenergiebetätigbaren Bremsaktor zum variablen Einstellen der Bremskraft und es ist eine Steuervorrichtung zum automatischen Ansteuern des Bremsaktors in Abhängigkeit zumindest eines Betriebsparameters der Ballenpresse vorgesehen. Insbesondere kann die Steuervorrichtung den Zeitpunkt der Bremskraftbereitstellung und/oder den Bremsmoment- bzw. -kraftverlauf variabel in Abhängigkeit des Betriebszustands der Ballenpresse einstellen und variieren. Je nach Betriebszustand kann die Bremskraft vorteilhafter Weise auf- und weggeschaltet und/oder erhöht und/oder erniedrigt werden.

In vorteilhafter Weiterbildung der Erfindung kann die genannte Bremsvorrichtung elektrisch arbeitend und/oder betätigbar ausgebildet sein. Hierdurch wird eine einfache Ansteuerung der Bremsvorrichtung ermöglicht und gleichzeitig eine unkomplizierte Energieversorgung der Bremsvorrichtung erreicht.

Insbesondere kann in Weiterbildung der Erfindung eine Elektromagnet-Bremse vorgesehen sein. Alternativ oder zusätzlich kann die Bremsvorrichtung aber auch eine Wirbelstrombremse, eine Magnetpulverbremse und/oder auch eine Reibbremse mit einem elektrischen Aktuator umfassen.

Die Steuervorrichtung, die die Bremsvorrichtung ansteuert und/oder deren Bremskraft bzw. Bremsmoment einstellt, kann grundsätzlich verschiedene Betriebsparameter der Ballenpresse berücksichtigen. In Weiterbildung der Erfindung kann die Bremskraft der Bremsvorrichtung an den Wickeldurchmesser und/oder das Speichervolumen des Wickelmaterialspeichers angepasst werden, insbesondere dann, wenn die Bremsvorrichtung unmittelbar an dem Wickelmaterialspeicher angreift und dessen Abziehwiderstand beeinflusst. Der Wickeldurchmesser bzw. das noch vorhandene, befüllte Speichervolumen des Wickelmaterialspeichers kann durch eine geeignete Bestimmungseinrichtung laufend oder zyklisch bestimmt werden, insbesondere durch eine sensorische Erfassungseinrichtung erfasst werden. Alternativ oder zusätzlich zu einer solchen sensorischen Erfassung kann der verbleibende Wickeldurchmesser aber beispielsweise auch berechnet werden, beispielsweise aus den bereits erfolgten Abwickeldrehungen bzw. dem beim Abwickeln zurückgelegten Drehwinkel der Wickelspeicherspule und/oder den anfänglichen Wickellagen.

Die Steuervorrichtung kann dabei die Bremsvorrichtung in Abhängigkeit des erfassten Wickeldurchmessers insbesondere derart ansteuern, dass eine näherungsweise konstante Wickelmaterialspannung vorgesehen wird, zumindest während des eigentlichen Wickelvorgangs, bei dem das Wickelmaterial um den Ballen gewickelt wird, und/oder die Wickelmaterialspannung einem vorgebbaren Spannungsprofil, d.h. Spannungsfunktion über der Zeit oder über der abgewickelten Strecke, folgt.

In zeitlichen Randbereichen eines Wickelzyklus und/oder in Zeitabschnitten zwischen den genannten Wickelzyklen kann eine erniedrigte Bremskraft eingestellt oder die Bremskraft gänzlich weggeschaltet werden, beispielsweise um das anfängliche Einziehen des Wickelmaterials zu erleichtern und/oder beim Abschneiden oder Abtrennen des Wickelmaterials in oder nach der Endphase des Wickelvorgangs ein Einreißen zu vermeiden.

Grundsätzlich kann die Steuervorrichtung derart ausgebildet sein, dass für einen Wickelzyklus und/oder daran angrenzende Zyklusabschnitte beliebige Bremskraftverläufe und/oder Bremsmomentverläufe und damit Wickelmaterialspannungsverläufe bzw. -profile vorgebbar und/oder erreichbar sind. Beispielsweise kann die Bremskraft während eines Wickelzyklus derart variiert werden, dass eine anfangs kleinere Bremskraft mit zunehmendem Umschlingungs- bzw. Umwickelwinkel zu einer zunehmend größeren Bremskraft erhöht wird und/oder gegen Ende eines Wickelzyklus eine kleinere Bremskraft eingestellt wird, um das Anhaften eines Endabschnitts des Wickelmaterials zu erleichtern.

Wird in der vorgenannten Weise die Bremskraft an den Durchmesser des Wickelmaterialspeichers angepasst, kann beispielsweise vorgesehen sein, dass bei einem größeren Durchmesser eine größere Bremskraft und bei einem kleineren Durchmesser eine kleinere Bremskraft eingestellt wird, wobei insbesondere die Bremskraft bzw. das Bremsmoment proportional zum abnehmenden Wickeldurchmesser verkleinert werden kann. Ein solcher Bremskraftverlauf geht von der Überlegung aus, dass mit zunehmend kleiner werdendem Durchmesser des Wickelmaterialspeichers der Hebelarm des abzuziehenden Wickelmaterials bezüglich des Wickelmaterialspeichers zunehmend kleiner wird und insofern eine an sich gleichbleibende Wickelmaterialspannung mit einer zunehmend kleiner werdenden Bremskraft erreicht werden kann.

In vorteilhafter Weiterbildung der Erfindung kann die genannte Steuervorrichtung Eingabemittel zum Vorgeben eines bestimmten Bremskraftverlaufs und/oder Bremsmomentverlaufs für einen Wickelzyklus und/oder Vorgabe einer bestimmten Bremskraft und/oder eines bestimmten Bremsmoments und/oder Vorgabe eines bestimmten Zeitpunkts für das Zu- und/oder Abschalten der Bremskraft aufweisen. Derartige Eingabemittel können beispielsweise ein Touchscreen oder eine Tastatur umfassen, wobei die Steuereinrichtung programmierbare Speichermittel umfassen kann, um den gewünschten, jeweils eingegebenen Bremskraftverlauf bzw. die vorgenannten weiteren Parameter zu speichern.

Alternativ oder zusätzlich zu einem solchen vom Benutzer der Ballenpresse speicherprogrammierbaren Modul kann die Steuervorrichtung auch nach Art einer Bibliothek verschiedene Bremskraftverläufe und/oder Bremsmomentverläufe und/oder Bremskraftzeitpunkte und/oder Bremskraftwerte und/oder Bremsmomentwerte bereitstellen, die vom Maschinenhersteller vorprogrammiert sein können. Die Steuervorrichtung umfasst vorteilhafterweise Auswahlmittel, mit Hilfe derer solche vorprogrammierten Bremsparameter und/oder -funktionen auswählbar sind.

Insbesondere können für verschiedene Wickelmaterialien verschiedene Bremsfunktionen einprogrammierbar und/oder in Form von vorprogrammierten Bremsfunktionen auswählbar sein. Beispielsweise kann für eine Wickelfolie eine erste Bremsfunktion, für ein Wickelnetz eine zweite Bremsfunktion und für ein Wickelband eine dritte Bremsfunktion und/oder entsprechende Bremskraft- und/oder -momentwerte einprogrammierbar und/oder auswählbar sein.

Nach der Erfindung kann die Steuervorrichtung zum Ansteuern der Bremsvorrichtung nach Art einer Regeleinrichtung den Ist-Zustand der Wickelmaterialspannung erfassen und bei der Betätigung der Bremsvorrichtung berücksichtigen. Dabei weist die Steuervorrichtung eine Erfassungseinrichtung zum Erfassen der Ist-Spannung des Wickelmaterials und einen Regler zum Einstellen der Bremskraft in Abhängigkeit eines Soll-Istwert-Vergleichs der Wickelmaterialspannung auf.

Die Erfassung des Ist-Zustands der Wickelmaterialspannung kann dabei grundsätzlich in verschiedener Weise erfolgen. Die genannte Erfassungseinrichtung kann beispielsweise Erfassungsmittel zum Erfassen einer Ballenumlaufgeschwindigkeit und zum Erfassen einer Wickelmaterial-Einlaufgeschwindigkeit aufweisen, wobei ein Differenzbestimmer die Geschwindigkeitsdifferenz zwischen der Ballenumlaufgeschwindigkeit und der Netzeinlaufgeschwindigkeit bestimmt, welche Geschwindigkeitsdifferenz als ein Maß für die Wickelmaterialspannung genommen werden kann.

Erfindungsgemäß umfasst die Erfassungseinrichtung einen gegen das Wickelmaterial vorspannbaren Tänzer, wobei Erfassungsmittel zum Erfassen einer Auslenkung des genannten Tänzers bei einer vorbestimmten Tänzervorspannung und/oder zum Erfassen der Tänzervorspannung bei einer vorbestimmten Auslenkung des Tänzers vorgesehen sind. Der genannte Tänzer kann beispielsweise eine Umlenkrolle aufweisen, um die das Wickelmaterial auf dem Weg zwischen Wickelmaterialspeicher und Ballenformkammer umgelenkt wird, wobei die genannte Umlenkrolle vorteilhafter Weise näherungsweise senkrecht zum Förderweg des Wickelmaterials und/oder senkrecht zur Oberfläche des Wickelmaterials auslenkbar und durch eine Vorspannvorrichtung vorspannbar ist.

Der genannte Tänzer versucht das Wickelmaterial quer zu dessen Förderrichtung und/oder quer zur Oberfläche des Wickelmaterials auszulenken. Je nach Wickelmaterialspannung ist dabei eine größere oder eine kleinere Vorspannung nötig, um eine bestimmte Auslenkung zu realisieren und/oder eine größere oder kleinere Auslenkung erforderlich, um eine bestimmte Tänzervorspannung zu erzielen. Insofern kann die Auslenkung und/oder die Vorspannung des genannten Tänzers als Maß für die Wickelmaterialspannung angesehen werden.

Dabei steuert die genannte Steuervorrichtung die Bremsvorrichtung in Abhängigkeit der Tänzerauslenkung und/oder der Tänzervorspannung an, insbesondere derart, dass die Tänzerauslenkung und/oder die Tänzervorspannung zumindest näherungsweise konstant gehalten wird und/oder einem vorbestimmtem Verlauf folgt und somit die Wickelmaterialspannung näherungsweise konstant gehalten wird oder einem vorbestimmten Verlauf folgt.

Zusätzlich zu einer solchen Berücksichtigung der tatsächlichen Wickelmaterialspannung und der hierfür repräsentativen Größen Tänzerspannung und/oder Tänzerauslenkung kann die Steuervorrichtung auch ein Ist-Moment der Bremsvorrichtung bei der Ansteuerung der Bremsvorrichtung berücksichtigen, insbesondere das Bremsmoment durch einen Bremskraftregler regeln. Hierzu kann die vorgenannte Erfassungseinrichtung beispielsweise einen Drehmomentsensor aufweisen, der das von der Bremsvorrichtung bereitgestellte Ist-Moment erfasst und in den genannten Bremskraftregler speist, der in Abhängigkeit des rückgekoppelten Ist-Signals des Bremsmoments, insbesondere in Abhängigkeit eines Vergleichs des genannten Ist-Werts mit einem vorbestimmten Soll-Wert, die Bremsvorrichtung ansteuert, um die gewünschte Soll-Bremskraft bzw. das gewünschte Soll-Bremsmoment möglichst präzise bereitzustellen.

Alternativ kann das Soll-Bremsmoment jedoch auch in offener Weise gesteuert werden, beispielsweise durch Vorgabe eines entsprechenden Stromwertes, mit dem die vorzugsweise elektrisch ausgebildete Bremse betätigt wird.

Die Erfindung wird nachfolgend anhand eines bevorzugten Ausführungsbeispiels und zugehöriger Zeichnungen näher erläutert. In den Zeichnungen zeigen:
- Fig. 1:: eine ausschnittsweise, schematische Darstellung der Ballenformkammer einer landwirtschaftlichen Ballenpresse und der dieser zugeordneten Wickelvorrichtung zum Zuführen eines Wickelmaterials wie eines Netzes oder einer Folie, wobei die dem Wickelmaterialspeicher zugeordnete Bremsvorrichtung und einer Tänzerwalzenanordnung zur Bestimmung der Wickelmaterialspannung dargestellt sind,
- Fig. 2:: eine ausschnittsweise Schnittansicht des Wickelmaterialspeichers und der diesem zugeordneten Bremsvorrichtung, und
- Fig. 3:: eine Diagrammdarstellung des von der Bremsmomentvorrichtung bereitgestellten Bremsmoments und der sich einstellenden Wickelmaterialspannung in Abhängigkeit des Wickeldurchmessers am Wickelmaterialspeicher.

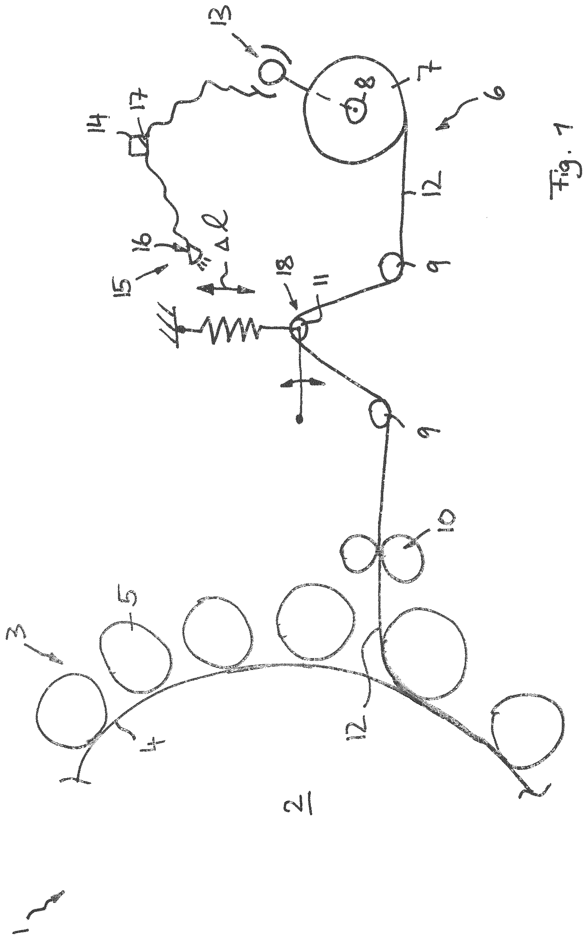

Wie Fig. 1 zeigt, kann eine Ballenpresse 1 eine Ballenformkammer 2 aufweisen, die zum Formen und/oder Verpressen von Erntegut zu Ballen ausgebildet und im Durchmesser variabel sein kann, wobei die genannte Ballenkammer 2 insbesondere im Wesentlichen zylindrisch konturiert sein kann.

Die Ballenpresse 1 kann dabei als landwirtschaftliche Ballenpresse ausgebildet sein, die eine in den Zeichnungen nicht eigens dargestellte Aufnahmevorrichtung zum Aufnehmen von Erntegut vom Boden besitzen kann. Eine solche Aufnahmevorrichtung kann insbesondere in an sich bekannter Weise eine Pick-up mit einer rotierenden Stachelwalze und ggfs. einen nachgeordneten Förderrotor umfassen, um das vom Boden aufgenommene Erntegut durch einen Einlauf hindurch in die genannte Ballenformkammer 2 zu fördern.

Wie Fig. 1 zeigt, können in an sich bekannter Weise um die Ballenkammer 2 herum Umlenkmittel 3 zum Formen des Ballens angeordnet sein, die in an sich bekannter Weise Umlaufbänder 4 und Umlenkrollen 5 umfassen können.

Um einen in der Ballenformkammer 2 geformten Ballen mit einem Wickelmaterial 12 umwickeln zu können, ist des Weiteren eine Wickelvorrichtung 6 vorgesehen, die das genannte Wickelmaterial 12 - beispielsweise in Form eines Netzes und/oder einer Folie und/oder Riemen und/oder Bändern und/oder Schnüren - in die Ballenformkammer 2 einführen kann, sodass das Wickelmaterial 12 um den Ballen gewickelt wird.

Wie Fig. 1 zeigt, kann die Wickelvorrichtung 6 einen Wickelmaterialspeicher 7 umfassen, von dem Wickelmaterial 12 abgezogen und in die Ballenformkammer 2 eingeführt werden kann. Hierzu kann die Wickelvorrichtung 6 Fördermittel 10 beispielsweise in Form von Förderwalzen umfassen, die paarweise zusammenarbeiten und zwischen denen das Wickelmaterial 12 hindurchgefördert wird. Zumindest eine der genannten Förderwalzen kann hierbei von einem geeigneten Antrieb beispielsweise in Form eines Elektromotors angetrieben werden. Wie Fig. 1 zeigt, kann die Wickelvorrichtung 6 ferner Umlenkrollen 9 aufweisen, um den Förderweg zwischen Wickelmaterialspeicher 7 und den Fördermitteln 10 vorgeben zu können.

Der genannte Wickelmaterialspeicher 7 kann beispielsweise eine Speicherwalze 8 umfassen, auf der das Wickelmaterial 12 nach Art eines Coils in mehreren Lagen aufgewickelt sein kann, sodass das Wickelmaterial 12 unter Drehung der Speicherwalze 8 vom Wickelmaterialspeicher 7 abgezogen werden kann.

Um die bei der Zufuhr des Wickelmaterials 12 in die Ballenformkammer bestehende Wickelmaterialspannung steuern zu können, ist eine Bremsvorrichtung 13 vorgesehen, die das Abziehen des Wickelmaterials 12 vom Wickelmaterialspeicher 7 bzw. das Fördern des Wickelmaterials bremst und dem genannten Wickelmaterialspeicher 7 zugeordnet sein kann.

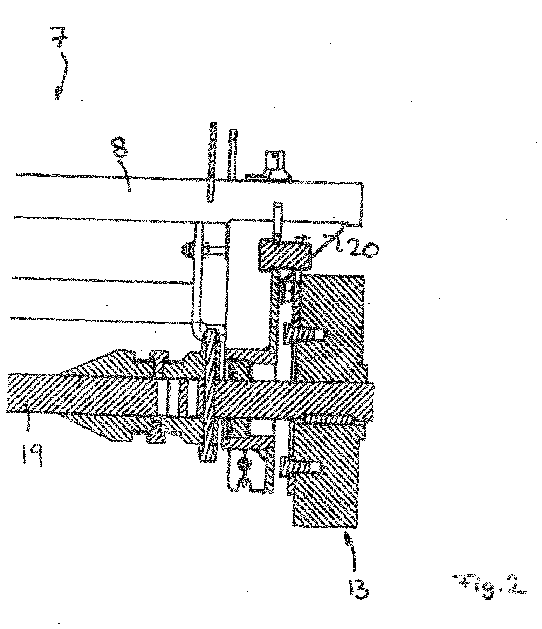

Wie Fig. 2 zeigt, kann die Bremsvorrichtung 13 der Speicherwalze 8 zugeordnet sein, auf der das Wickelmaterial 12 aufgewickelt ist, um den Drehwiderstand der genannten Speicherwalze 7 und damit den Widerstand gegen das Abziehen des Wickelmaterials zu steuern. Beispielsweise kann die Speicherwalze 8 drehbar auf einer Achse 19 gelagert sein, wobei auch die Bremsvorrichtung 13, genauer gesagt deren feststehender Teil, auf der besagten Achse 19 roratorisch feststehend angeordnet sein kann, vgl. Fig. 2. Über eine Drehmomentstütze 20 kann der drehbare Teil der Bremsvorrichtung 15 mit der Speicherwalze 8 roratorisch gekoppelt sein.

Die Bremsvorrichtung 13 ist vorteilhafter Weise elektrisch betätigbar bzw. elektrisch arbeitend ausgebildet, wobei die Bremsvorrichtung 13 insbesondere eine elektromagnetische Bremse sein kann. Alternativ oder zusätzlich kann die Bremsvorrichtung 13 aber auch eine Wirbelstrombremse, eine Magnetpulverbremse oder eine Reibbremse mit elektrischem Aktuator umfassen.

Die Bremsvorrichtung 13 kann eine variable Bremskraft bzw. ein variables Bremsmoment bereitstellen, wobei die Bremsvorrichtung 13 von einer Steuervorrichtung 14 angesteuert wird, die die Bremskraft in Abhängigkeit zumindest eines Betriebsparameters der Ballenpresse 1 steuert, so wie dies eingangs bereits erläutert wurde. Die genannte Steuervorrichtung 14 kann insbesondere eine elektronische Steuervorrichtung beispielsweise umfassend einen Datenprozessor und/oder Reglerbausteine und/oder Steuerungsmodule ausgebildet sein und zumindest eine Bestimmungseinrichtung 15 zum Bestimmen des genannten, zumindest einen Betriebsparameters aufweisen.

Wie Fig. 1 zeigt, kann die genannte Bestimmungseinrichtung 15 eine Erfassungseinrichtung 16 zum Erfassen der Wickelmaterialspannung 12 aufweisen, wobei die genannte Wickelmaterialspannung zwischen dem Wickelmaterialspeicher 7 und den Fördermitteln 10 und/oder vor Einführen des Wickelmaterials in die Ballenformkammer gemessen werden kann. Vorteilhafter Weise kann die genannte Erfassungseinrichtung 16 hierzu einen Tänzer 18 beispielsweise in Form einer Tänzerwalze aufweisen, die mittels einer Vorspannvorrichtung 21 gegen das abzuziehende Wickelmaterial 12 gespannt wird. Die genannte Vorspannvorrichtung 21 kann hierbei eine Wirkrichtung besitzen, die sich quer, insbesondere senkrecht zum Förderweg des Wickelmaterials 12 und/oder zur Oberfläche des Wickelmaterials 12 und/oder zu einer Verbindungsebene, die zwei benachbarte Umlenkrollen 9 verbindet, ausgerichtet sein und den genannten Tänzer in entsprechender Richtung gegen die Wickelmaterialoberfläche 12 drückt bzw. zieht, vgl. Fig. 1.

Der Tänzer 18 kann beispielsweise an einem Schwenkarm 22 schwenkbar gelagert sein, dessen Schwenkachse 23 parallel zur Rotationsachse der benachbarten Umlenkrollen 9 ausgerichtet sein kann.

Die genannte Vorspannvorrichtung 21 kann beispielsweise eine Federeinrichtung umfassen, die als mechanische Feder und/oder Gasdruckfeder oder in anderer Weise ausgebildet sein kann. Alternativ oder zusätzlich kann auch ein Hydraulikzylinder, der von einer entsprechenden Druckquelle beaufschlagbar ist, als Vorspannvorrichtung eingesetzt werden.

Wie Fig. 1 veranschaulicht, kann die Auslenkung Δ I des Tänzers 18 von einem Sensor der Erfassungseinrichtung 16 erfasst werden und von der Steuervorrichtung 14 als Maß für die Wickelmaterialspannung bzw. als Ist-Wert der Wickelmaterialspannung genommen werden. Je nach Ausbildung der Vorspannvorrichtung 21 und Lagerung des Tänzers 18 kann die Steuervorrichtung 14 hierbei ggfs. Zwischenrechenschritte ausführen, um aus dem genannten Auslenkungswert Δ I die Wickelmaterialspannung zu berechnen.

In Abhängigkeit des Ist-Werts der Wickelmaterialspannung kann die Steuervorrichtung 14 die Bremsvorrichtung 13 ansteuern, um den Ist-Wert möglichst nahe zu einem vorgebbaren Soll-Wert der Wickelmaterialspannung zu steuern.

Der genannte Soll-Wert der Wickelmaterialspannung kann ein konstanter Wert sein, alternativ aber auch in Form einer variablen Wickelmaterialspannungs-Funktion über der Zeit und/oder über der Abziehstrecke des Wickelmaterials veränderlich vorgegeben werden.

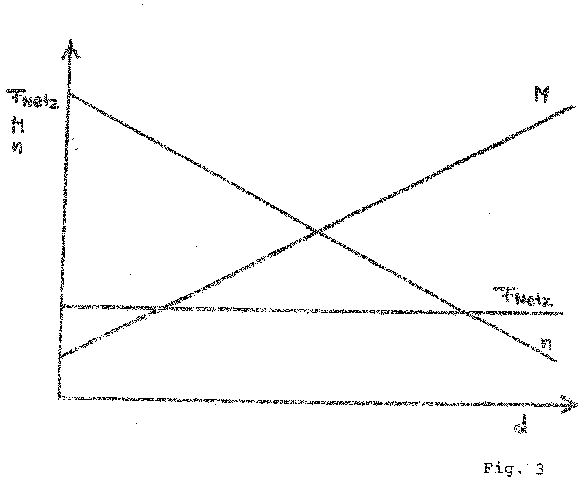

Wird eine konstant bleibende Wickelmaterialspannung gewünscht, kann, wie dies Fig. 3 zeigt, das Bremsmoment M, das von der Bremsvorrichtung 13 aufzubringen ist, mit zunehmend größer werdendem Durchmesser des Wickels des Wickelmaterials 12 auf der Speicherwalze 8 zunehmend größer werden, das heißt für größere Wickeldurchmesser wird ein größeres Bremsmoment und für kleinere Wickeldurchmesser ein kleineres Bremsmoment vorgesehen, wobei das Bremsmoment proportional zum Wickeldurchmesser steigen kann. In Fig. 3 zeigt die mit zunehmendem Wickeldurchmesser fallende Linie n die Lagen des Wickelmaterials 12 auf der Speicherwalze 8 an. Die gleichbleibende Wickelmaterialspannung ist mit FNetz bezeichnet.

## Patentansprüche

1. Ballenpresse zum Erzeugen von Erntegutballen, mit einer Wickelvorrichtung (6) zum Umwickeln eines geformten Erntegutballens mit Wickelmaterial (12) wie Folie, Netz oder dergleichen, wobei die Wickelvorrichtung (6) einen Wickelmaterialspeicher (7), von dem Wickelmaterial (12) abziehbar ist, sowie eine Bremsvorrichtung (13) zum Einstellen einer Wickelmaterialspannung umfasst, wobei die Bremsvorrichtung (13) einen fremdenergiebetätigbaren Bremsaktor zum variablen Einstellen der Bremskraft und/oder des Bremsmoments umfasst, wobei eine Steuervorrichtung (14) zum automatischen Steuern des Bremsaktors in Abhängigkeit einer Wickelmaterialspannung vorgesehen ist, **dadurch gekennzeichnet, dass** die Steuervorrichtung (14) eine Erfassungseinrichtung (16) zum Erfassen der Ist-Spannung des Wickelmaterials (12), die einen gegen das Wickelmaterial (12) vorspannbaren Tänzer (18) sowie Erfassungsmittel zum Erfassen einer Auslenkung des Tänzers (18) bei einer vorbestimmten Tänzervorspannung und/oder zum Erfassen einer Tänzervorspannung bei einer bestimmten Tänzerauslenkung und/oder zum Erfassen von Tänzervorspannung und Tänzerauslenkung aufweist, sowie einen Regler (17) zum Einstellen der Bremskraft und/oder des Bremsmoments der Bremsvorrichtung (13) in Abhängigkeit eines Soll-IstWertvergleichs der erfassten Tänzerauslenkung und/oder -vorspannung aufweist.

2. Ballenpresse nach dem vorhergehenden Anspruch, wobei die Bremsvorrichtung (13) elektrisch betätigbar und/oder elektrisch arbeitend ausgebildet ist.

3. Ballenpresse nach dem vorhergehenden Anspruch, wobei die Bremsvorrichtung (13) eine Elektromagnet-Bremse umfasst.

4. Ballenpresse nach einem der beideri vorhergehenden Ansprüche, wobei die Bremsvorrichtung (13) eine Wirbelstrombremse, eine Magnetpulverbremse und/oder Reibbremse mit elektrischem Aktuator aufweist.

5. Ballenpresse nach einem der vorhergehenden Ansprüche, wobei die Steuervorrichtung (14) eine Bestimmungseinrichtung (15) zum Bestimmen eines Wickeldurchmessers und/oder eines Speichervolumens des Wickelmaterialspeichers (7) aufweist und dazu ausgebildet ist, die Bremskraft in Abhängigkeit des bestimmten Wickeldurchmessers und/oder des bestimmten Speichervolumens einzustellen, insbesondere derart, dass eine näherungsweise konstante Wickelmaterialspannung vorgesehen ist.

6. Ballenpresse nach dem vorhergehenden Anspruch, wobei die Steuervorrichtung (14) dazu ausgebildet ist, für einen größeren Wickeldurchmesser des Wickelmaterialspeichers (7) ein größeres Bremsmoment und für einen kleineren Wickeldurchmesser ein kleineres Bremsmoment einzustellen.

7. Ballenpresse nach einem der vorhergehenden Ansprüche, wobei die Steuervorrichtung (14) einen speicherprogrammierbaren Steuerungsbaustein umfasst, in dem ein Bremskraftverlauf, ein Bremsmomentverlauf, ein Bremssteuersignalverlauf, oder eine Bremsfunktion in Abhängigkeit zumindest eines Betriebsparameters der Ballenpresse einspeicherbar ist.

8. Ballenpresse nach dem vorhergehenden Anspruch, wobei die Steuervorrichtung (14) Eingabemittel zum Eingeben und/oder Verändern des Bremskraftverlaufs, des Bremsmomentverlaufs, des Bremssteuersignalverlaufs, oder der Bremsfunktion in Abhängigkeit zumindest eines Betriebsparameters der Ballenpresse durch einen Benutzer der Ballenpresse aufweist.

9. Ballenpresse nach einem der beiden vorhergehenden Ansprüche, wobei die Steuervorrichtung (14) Auswahlmittel zum Auswählen eines Bremskraftverlaufs, eines Bremsmomentverlaufs, eines Bremssteuersignalverlaufs, oder einer Bremsfunktion in Abhängigkeit zumindest eines Betriebsparameters der Ballenpresse aus mehreren, vorab abgespeicherten Bremskraftverläufen, Bremsmomentverläufen, Bremssteuersignalverläufen, oder Bremsfunktionen in Abhängigkeit durch einen Benutzer der Ballenpresse aufweist.

## Claims

1. Baling press for producing bales of crop, comprising a wrapping device (6) for enwrapping a formed bale of crop with a wrapping material (12) such as a foil, mesh or the like, wherein the wrapping device (6) comprises a wrapping material storage (7), from which wrapping material (12) can be removed, as well as a braking device (13) for setting a wrapping material tension, wherein the braking device (13) includes a brake actuator actuatable by external energy for the variable setting of the braking force and/or of the braking moment, wherein a controller (14) is provided for the automatic control of the braking actuator dependent upon a wrapping material tension, **characterized in that** the controller (14) comprises a detection device (16) for detecting the actual tension of the wrapping material (12), which comprises a dancer roller which can be pre-tensioned in relation to the wrapping material (12), as well as detection means for detecting a deflection of the dancer roller (18) at a certain dancer roller deflection and/or for detecting the dancer roller pre-tension and dancer roller deflection, as well as comprises a regulator (17) for setting the braking force and/or the braking moment of the braking device (13) dependent upon a target/actual value comparison of the detected dancer roller deflection and/or pre-tension.

2. Baling press according to the preceding claim, wherein the braking device (13) is formed to be electrically actuatable and/or electrically operating.

3. Baling press according to the preceding claim, wherein the braking device (13) includes an electromagnetic brake.

4. Baling press according to one of the two preceding claims, wherein the braking device (13) comprises an eddy-current brake, a magnetic powder brake and/or a friction brake with electric actuator.

5. Baling press according to any one of the preceding claims, wherein the control device (14) comprises a determination device (15) for determining a wrapping diameter and/or a storage volume of the wrapping material storage (7), and is configured to set the brake force dependent upon the determined wrapping diameter and/or the determined storage volume, in particular in such a way that an approximately constant wrapping material tension is provided.

6. Baling press according to the preceding claim, wherein the controller (14) is configured to set a larger brake moment for a larger wrapping diameter of the wrapping material storage (7), and a smaller brake moment for a smaller wrapping diameter.

7. Baling press according to any one of the preceding claims, wherein the controller (14) includes a programmable logic controller module, in which a brake force profile, a brake moment profile, a brake control signal profile, or a brake function dependent on at least one operating parameter of the baling press can be stored.

8. Baling press according to the preceding claim, wherein the controller (14) comprises input means for inputting and/or changing the brake force profile, the brake moment profile, the brake control signal profile, or the brake function dependent upon at least one operating parameter of the baling press by a user of the baling press.

9. Baling press according to any one of the two preceding claims, wherein the controller (14) comprises selection means for selecting a brake force profile, a brake moment profile, a brake control signal profile, or a brake function dependent on at least one operating parameter of the baling press from multiple pre-stored brake force profiles, brake moment profiles, brake control signal profiles, or brake functions by a user of the baling press.

## Revendications

1. Presse à balles servant à générer des balles de produit de récolte, avec un dispositif d'enroulement (6) servant à envelopper une balle de produit de récolte formée de matériau d'enroulement (12) tel qu'un film, un filet ou similaire, dans laquelle le dispositif d'enroulement (6) comprend un système de stockage de matériau d'enroulement (7), duquel du matériau d'enroulement (12) peut être retiré, ainsi qu'un dispositif de freinage (13) servant à régler une tension de matériau d'enroulement, dans laquelle le dispositif de freinage (13) comprend un actionneur de freinage pouvant être actionné par une énergie extérieure servant à régler de manière variable la force de freinage et/ou le couple de freinage, dans laquelle
un dispositif de commande (14) est prévu pour commander de manière automatique l'actionneur de freinage en fonction d'une tension de matériau d'enroulement, **caractérisée en ce que** le dispositif de commande (14) présente un système de détection (16) servant à détecter la tension réelle du matériau d'enroulement (12), qui présente un tendeur (18) pouvant être précontraint contre le matériau d'enroulement (12) ainsi que des moyens de détection servant à détecter une déviation du tendeur (18) en présence d'une précontrainte de tendeur prédéfinie et/ou servant à détecter une précontrainte de tendeur en présence d'une déviation de tendeur définie et/ou servant à détecter une précontrainte de tendeur et une déviation de tendeur, ainsi qu'un régulateur (17) servant à régler la force de freinage et/ou le couple de freinage du dispositif de freinage (13) en fonction d'une comparaison de valeurs théoriques-réelles de la déviation et/ou de la précontrainte de tendeur détectées.

2. Presse à balles selon la revendication précédente, dans laquelle le dispositif de freinage (13) est réalisé de manière à pouvoir être actionné électriquement et/ou de manière à fonctionner électriquement.

3. Presse à balles selon la revendication précédente, dans laquelle le dispositif de freinage (13) comprend un frein électromagnétique.

4. Presse à balles selon l'une quelconque des deux revendications précédentes, dans laquelle le dispositif de freinage (13) présente un frein à courants de Foucault, un frein à poudre magnétique et/ou un frein à friction avec un actionneur électrique.

5. Presse à balles selon l'une quelconque des revendications précédentes, dans laquelle le dispositif de commande (14) présente un système de définition (15) servant à définir un diamètre d'enroulement et/ou un volume de système de stockage du système de stockage de matériau d'enroulement (7) et est réalisé pour régler la force de freinage en fonction du diamètre d'enroulement défini et/ou du volume de système de stockage défini, en particulier de telle manière qu'une tension de matériau d'enroulement approximativement constante est prévue.

6. Presse à balles selon la revendication précédente, dans laquelle le dispositif de commande (14) est réalisé pour régler pour un diamètre d'enroulement plus grand du système de stockage de matériau d'enroulement (7) un couple de freinage plus grand et pour un diamètre d'enroulement plus petit un couple de freinage plus petit.

7. Presse à balles selon l'une quelconque des revendications précédentes, dans laquelle le dispositif de commande (14) comprend un module de commande à stockage programmable, dans lequel une évolution de force de freinage, une évolution de couple de freinage, une évolution de signal de commande de freinage, ou une fonction de freinage peuvent être mémorisées en fonction d'au moins un paramètre de fonctionnement de la presse à balles.

8. Presse à balles selon la revendication précédente, dans laquelle le dispositif de commande (14) présente des moyens de saisie servant à saisir et/ou à modifier l'évolution de force de freinage, l'évolution de couple de freinage, l'évolution de signal de commande de freinage, ou la fonction de freinage en fonction d'au moins un paramètre de fonctionnement de la presse à balles par un utilisateur de la presse à balles.

9. Presse à balles selon l'une quelconque des deux revendications précédentes, dans laquelle le dispositif de commande (14) présente des moyens de sélection servant à sélectionner une évolution de force de freinage, une évolution de couple de freinage, une évolution de signal de commande de freinage ou une fonction de freinage en fonction d'au moins un paramètre de fonctionnement de la presse à balles parmi plusieurs évolutions de force de freinage, évolutions de couple de freinage, évolutions de signal de commande de freinage ou fonctions de freinage sauvegardées au préalable par un utilisateur de la presse à balles.
